# EUROPÄISCHE PATENTSCHRIFT

(11) **EP 1 308 351 B1**
(45) Veröffentlichungstag und Bekanntmachung des Hinweises auf die Patenterteilung: **14.06.2006**
(21) Anmeldenummer: 02020861.7
(22) Anmeldetag: 18.09.2002
(51) Int. Cl.: B60R 21/01, B60R 11/00, G01S 7/40

(54) **Halterung für ein justierbares Radarsensorgehäuse**
Holding device for an adjustable radar sensor housing
Dispositif de support pour un boîtier de capteur radar ajustable

(30) Priorität: 02.11.2001 DE 10154079
(43) Veröffentlichungstag der Anmeldung: 07.05.2003
(73) Patentinhaber: ROBERT BOSCH GMBH, 70442 Stuttgart (DE)
(72) Erfinder: Winter, Klaus, 71701 Schwieberdingen (DE); Klaas, Thomas, 71640 Ludwigsburg (DE); Lucas, Bernhard, 84354 Besigheim (DE); Beez, Thomas, 74189 Weinsberg (DE); Wackerl, Oliver, 73230 Kichheim An Der Teck (DE)

(56) Entgegenhaltungen:
- EP-A- 1 103 823
- WO-A-01/71378
- DE-A- 4 412 770
- DE-A- 10 025 501
- DE-A- 19 949 969

## Beschreibung

### Stand der Technik

Die Erfindung betrifft eine Halterung für ein justierbares Gehäuse, insbesondere für das Gehäuse eines Radarsensors, das außen an einem Kraftfahrzeug angebracht ist, nach dem Oberbegriff des Hauptanspruchs.

In der Regel wird solch ein Radarsensor mit einer Halterung außen an einem Fahrzeug angeschraubt. Dieser Radarsensor kann beispielsweise ein Baustein eines Abstandswarnsystems sein, bei dem ständig Informationen über den Abstand und/oder die Relativgeschwindigkeit des Fahrzeuges zu anderen Fahrzeugen und zu den Straßengegebenheiten verarbeitet werden. Es ist hierbei notwendig, den Radarsensor sehr genau auf die Fahrzeuglängsachse auszurichten, wodurch aufgrund der zum Teil erheblichen Fahrzeugtoleranzen im Bereich der Anbaustelle eine horizontale und vertikale Justage des Sensors nach dem Einbau ins Kraftfahrzeug notwendig ist.

Es ist beispielsweise in der DE 199 24 055 A1 beschrieben, dass der Radarsensor nach der Montage durch manuelles Drehen von zwei Justageschrauben mit Hilfe eines Umlenkgetriebes von oben, unten oder seitlich justiert wird. Die Schwierigkeit besteht darin, einen Einbauraum für den Radarsensor zu finden, der einerseits ausreichend Platz bietet und die Hochfrequenzanforderungen erfüllt und andererseits eine einfache, schnelle und somit kostengünstige Justage des Radarsensors am Ende des Fertigungsprozesses ermöglicht.

Häufig wird die Zugänglichkeit der Justageschrauben aufgrund der sehr beengten Platzverhältnisse in den Fahrzeugen oder aus Designgründen erschwert, so dass nur mit Hilfe einer Hebebühne oder ähnlichen Hilfsmitteln die Justierung vorgenommen werden kann. Aussparungen oder Durchbrüche im Stoßstangenbereich, die die Zugänglichkeit erleichtern könnten, sind aus Designgründen meistens nicht realisierbar. Auch spezielle Werkzeuge, wie z.B. Winkelgetriebe sind aufwendig und teuer.

Eine mit einer geeigneten Steuerelektronik bewirkte motorische Verstellung der Justierschrauben ist in der nicht vorveröffentlichten DE 100 255 019 A1 beschrieben.

Aus der EP 1 103 823 A3 ist ein Verfahren zum Justieren eines Abstands- und Richtungssensors eines Fahrzeuges bekannt, bei dem die Ausrichtung des Abstands- und Richtungssensors eines Fahrzeuges fortlaufend überprüft wird, indem während der Fahrt fortlaufend mit Hilfe des Sensors der Abstands- und Richtungswinkel von Objekten relativ zum Fahrzeug erfasst werden und Richtungsvektoren berechnet werden aus denen die relative Lage der Fahrbahn zum Fahrzeug und daraus die gemessene Fahrtrichtung ermittelt wird eine Differenz zwischen der gemessenen Fahrtrichtung und einer aus einem Gierratensignal und der Fahrzeuggeschwindigkeit ermittelten Fahrtrichtung bestimmt wird. Aus dieser Differenz wird die Winkeldejustage des Sensors berechnet. Die Vorrichtung ist dabei in der Lage, die Ausrichtung des Sensors mit Verstellantrieben automatisch vorzunehmen, indem das Gehäuse gegenüber einer Halterung mittels eines Drehgelenks und zwei Linearantrieben verbunden ist, wobei die Verbindungslinien der Linearantriebe mit dem Drehgelenk senkrecht aufeinander stehen und somit der Sensor mittels der Verstelleinrichtungen in von einander unabhängigen Richtungen verdreht werden kann.

### Vorteile der Erfindung

Eine Halterung für ein justierbares Gehäuse der eingangs genannten Art, bei dem die Lage eines Gehäuses, z.B. für einen Radarsensor, mit mindestens einer Justierschraube veränderbar sein soll, ist mit den im Anspruch 1 angegebenen Merkmalen in vorteilhafter Weise weitergebildet. Die mindestens eine Justierschraube ist hier mittels ei-nes regelbaren Vertellantriebs verdrehbar ist und zur Justage des Gehäuses ist eine Steuerelektronik vorhanden, die Justiersignale an den jeweiligen Verstellantrieb () weiterleitet.

Weiterhin ist in vorteilhafter Weise ein Steckeranschluss für einen Busanschluss der Steuergeräteelektronik zur Kommunikation mit einem übergeordneten Bussystem, bevorzugt ein sogenannter CAN-Bus, vorhanden, wobei in einem kompakten Halterungsgehäuse die Steuerelektronik, der mindestens eine Verstellantrieb und der Steckanschluss untergebracht sind und lediglich die Befestigungspunkte der Justierschrauben für das justierbare Sensorgehäuse aus dem Halterungsgehäuse herausragen.

Nach einer vorteilhaften Ausführungsform ist die mindestens eine Justierschraube jeweils über eine Drehspindel mit dem Verstellantrieb zur Linearverstellung der Befestigungspunkte verbunden, wobei der jeweilige Verstellantrieb ein Schrittmotor oder ein Gleichstrommotor ist.

In besonders vorteilhafter Weise ist das Halterungsgehäuse aus zwei rechtwinklig zueinanderliegenden Armen aufgebaut, wobei jeweils ein über einen Verstellmotor linear veränderbarer Befestigungspunkt für das Sensorgehäuse am Ende jedes Arms und dritter nicht veränderlicher Befestigungspunkt im Schnittpunkt der beiden Arme liegt.

Mit der Erfindung kann bei einem besonders kompakten Aufbau der Halterung eine automatische Justage mit relativ geringem Zeitaufwand durchgeführt werden, wobei durch den günstigen Aufbau des Halterungsgehäuses und dem nicht notwendigen Zugang zu den Justierschrauben die Einbauposition sehr flexibel gewählt werden kann.

### Zeichnung

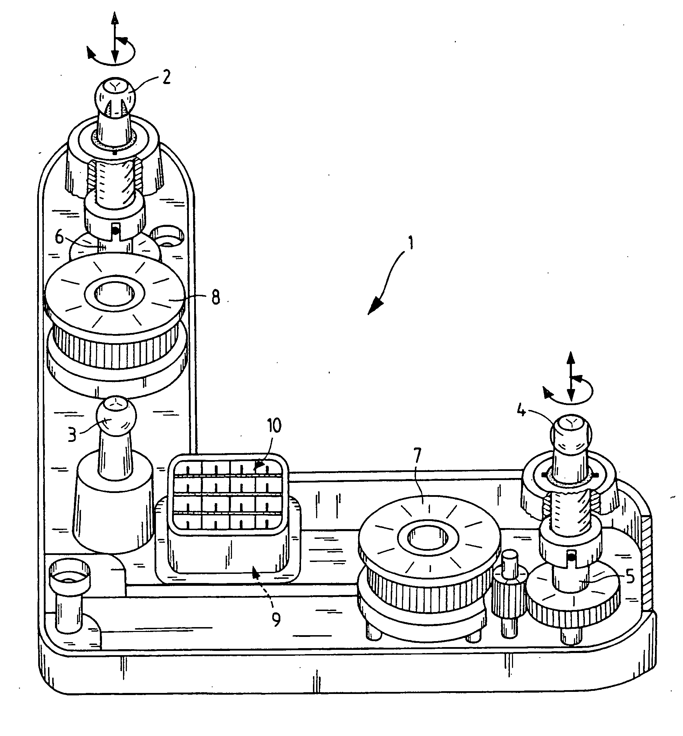

Ein Ausführungsbeispiel einer erfindungsgemäßen Halterung für das justierbare Gehäuse eines Radarsensors an einem Kraftfahrzeug wird anhand der einzigen Figur der Zeichnung erläutert.

### Beschreibung des Ausführungsbeispiels

Aus der einzigen Figur ist in einer perspektivischen Darstellung ein Halterungsgehäuse 1 für einen als Radarsensor aufgebauten Entfernungssensor ersichtlich, wie er im Prinzip aus dem eingangs erwähnten Stand der Technik bekannt ist. Der hier nicht gezeigte Radarsensor ist zur Befestigung an einem Kraftfahrzeug über das Halterungsgehäuse 1 an drei Befestigungspunkten 2, 3 und 4 justierbar angebracht.

Die Befestigungspunkte 2, 3 und 4 sind die Enden von Justierschrauben, die aufgrund ihrer L-förmigen Anordnung eine Dreipunktlagerung bilden, wobei die Befestigungspunkte 2 und 4 zwei Loslager für die horizontale und vertikale Justierung des nicht gezeigten Sensorgehäuses und der Befestigungspunkt 3 ein Festlager bildet.

Ein Ein- oder Ausschrauben beispielsweise der Justierschraube mit dem Befestigungspunkt 2 in den zugehörigen Einschraubbereich bewirkt ein Kippen des Sensorgehäuses um eine Achse, die durch die Aufhängepunkte der Befestigungspunkte 3 und 4 geht. Ein Ein- oder Ausschrauben der Justierschraube mit dem Befestigungspunkt 4 in den zugehörigen Einschraubbereich bewirkt ein Kippen des Sensorgehäuses um eine Achse, die durch die Aufhängepunkte der Befestigungspunkte 2 und 3 geht.

Die zuvor beschriebenen Befestigungspunkte 2 und 4 sind jeweils über eine mit einer Drehspindel, einem Getriebe oder einem Schneckenantrieb 5 und 6 verbundenen Verstellmotor 7 und 8 linear veränderbar. Die z.B. als Schrittmotor ausgeführten Verstellmotoren 7 und 8 sind über eine im Halterungsgehäuse 1 angeordnete Steuerelektronik 9 ansteuerbar, welche über einen Steckeranschluss 10 mit einem CAN-Bus verbindbar ist.

## Patentansprüche

1. Radarsensorhalterung eines justierbaren Gehäuses eines Radarsensors eines Fahrzeugs,
- wobei die Lage des Sensorgehäuses an der Halterung (1) mit mindestens einer Justierschraube veränderbar ist, dass
- die mindestens eine Justierschraube mittels eines regelbaren Verstellantriebs (7,8) verdrehbar ist, dass
- zur Justage des Sensorgehäuses eine Steuerelektronik (9) vorhanden ist, die Justiersignale an den jeweiligen Verstellantrieb (7,8) weiterleitet, **dadurch gekennzeichnet, dass**
- ein Steckeranschluss (10) für einen Busanschluss der Steuergeräteelektronik (9) zur Kommunikation mit einem übergeordneten Bussystem vorhanden ist und dass
- ein geschlossenes Halterungsgehäuse (1) vorhanden ist, das aus zwei rechtwinklig zueinanderliegenden Armen aufgebaut ist, in dem die Steuerelektronik (9), der mindestens eine Verstellantrieb (7,8) und der Steckeranschluss (10) untergebracht sind und aus dem Befestigungspunkte (2,3,4) der Justierschrauben für das justierbare Sensorgehäuse herausragen.

2. Radarsensorhalterung nach Anspruch 1, **dadurch gekennzeichnet, dass** die mindestens eine Justierschraube jeweils über ein Getriebe oder einen Schneckenantrieb (5,6) mit dem Versbellantrieb (7,8) zur Linearverstellung der Befestigungspunkte (2,3,4) verbunden ist.

3. Radarsensorhalterung nach Anspruch 1 oder 2, **dadurch gekennzeichnet, dass** der jeweilige Verstellantrieb (7,8) ein Schrittmotor ist.

4. Radarsensorhalterung nach Anspruch 1 oder 2, **dadurch gekennzeichnet, dass** der jeweilige Verstellantrieb (7,8) ein Gleichstrommotor ist.

5. Radarsensorhalterung nach einem der vorhergehenden Ansprüche, **dadurch gekennzeichnet, dass** das Halterungsgehäuse (1), das aus zwei rechtwinklig zueinanderliegenden Armen besteht, jeweils ein über einen Verstellantrieb (7,8) linear veränderbarer Befestigungspunkt (2,4) für das Sensorgehäuse am Ende jedes Arms und ein dritter nicht veränderlicher Befestigungspunkt (3) im Schnittpunkt der beiden Arme liegt.

6. Radarsensorhalterung nach einem der vorhergehenden Ansprüche, **dadurch gekennzeichnet, dass**- das Bussystem für die Steuersignale der Steuerelektronik ein CAN-Bus ist.

7. Radarsensorhalterung nach einem der vorhergehenden Ansprüche, **dadurch gekennzeichnet, dass**- das Sensorgehäuse Bestandteil eines Radarsensors ist, der außen an einem Bauteil eines Kraftfahrzeuges justierbar angebracht ist.

## Claims

1. Radar sensor holder of an adjustable housing of a radar sensor of a vehicle,
- in which the position of the sensor housing on the holder (1) can be varied using at least one adjusting screw in that
- the at least one adjusting screw can be turned by means of a controllable adjusting drive (7, 8) in that
- there are control electronics (9) for adjusting the sensor housing, these control electronics forwarding adjusting signals to the respective adjusting drive (7, 8), **characterized in that**
- there is a plug connection (10) for a bus connection of the control appliance electronics (9) for communicating with a superordinate bus system, and **in that**
- there is a closed holder housing (1) which is made up of two arms which are at right angles to one another, the control electronics (9), the at least one adjusting drive (7, 8) and the plug connection (10) being accommodated in the said holder housing, and fastening points (2, 3, 4) of the adjusting screws for the adjustable sensor housing protruding out of the said holder housing.

2. Radar sensor holder according to Claim 1, **characterized in that** the at least one adjusting screw is connected to the adjusting drive (7, 8) for linearly adjusting the fastening points (2, 3, 4) by means of a gear mechanism or a worm drive (5, 6) in each case.

3. Radar sensor holder according to Claim 1 or 2, **characterized in that** the respective adjusting drive (7, 8) is a stepper motor.

4. Radar sensor holder according to Claim 1 or 2, **characterized in that** the respective adjusting drive (7, 8) is a DC motor.

5. Radar sensor holder according to one of the preceding claims, **characterized in that** the holder housing (1) comprises two arms which are at right angles to one another, with a respective fastening point (2, 4) for the sensor housing, which fastening point can be linearly varied by means of an adjusting drive (7, 8), being situated at the end of each arm, and a third, fixed fastening point (3) being situated at the point of intersection of the two arms.

6. Radar sensor holder according to one of the preceding claims, **characterized in that** the bus system for the control signals of the control electronics is a CAN bus.

7. Radar sensor holder according to one of the preceding claims, **characterized in that** the sensor housing is a constituent part of a radar sensor which is fitted to the outside of a component of a motor vehicle such that it can be adjusted.

## Revendications

1. Support de boîtier ajustable d'un capteur de radar dans un véhicule,
- la position du boîtier de capteur pouvant être modifiée au niveau du support (1) à l'aide d'au moins une vis de réglage,
- la vis de réglage peut être tournée à l'aide d'un entraînement de réglage réglable (7, 8),
- un circuit électronique de commande (9) prévu pour l'ajustage du boîtier de capteur redirigeant des signaux d'ajustage vers l'entraînement de réglage respectif (7, 8),
**caractérisé en ce que**
- un raccord de connecteur (10) est prévu pour un raccord de bus de l'électronique de l'appareil commande (9) dans le but de communiquer avec un système bus raccordé, et
- un boîtier support fermé (1) formé à partir de deux bras perpendiculaires renferme l'électronique de commande (9), l'entraînement de réglage (7, 8) et le raccord de connecteur (10), et des points de fixation (2, 3, 4) des vis de réglage pour le boîtier de capteur ajustable dépassent du boîtier support.

2. Support de capteur radar selon la revendication 1,
**caractérisé en ce qu'**
au moins une vis de réglage est reliée à l'entraînement de réglage (7, 8) par l'intermédiaire d'un engrenage ou d'un entraînement à vis sans fin (5, 6) pour régler linéairement les points de fixation (2, 3, 4).

3. Support selon la revendication 1 ou 2,
**caractérisé en ce que**
l'entraînement de réglage respectif (7, 8) est un moteur pas à pas.

4. Support selon la revendication 1 ou 2,
**caractérisé en ce que**
l'entraînement de réglage respectif (7, 8) est un moteur à courant continu.

5. Support selon l'une des revendications précédentes,
**caractérisé en ce que**
le boîtier support (1), composé de deux bras perpendiculaires présente respectivement, à l'extrémité de chaque bras un point de fixation (2, 4) pour le boîtier de capteur pouvant être changé linéairement par l'intermédiaire d'un entraînement de réglage (7, 8) et, au point d'intersection des deux bras, un troisième point de fixation (3) non modifiable.

6. Support selon l'une des revendications précédentes,
**caractérisé en ce que**
le système bus pour les signaux de commande du circuit électronique de commande est un bus CAN.

7. Support selon l'une des revendications précédentes,
**caractérisé en ce que**
le boîtier est un élément d'un capteur radar qui est monté ajustable à l'extérieur sur un composant d'un véhicule automobile.
